# EUROPEAN PATENT SPECIFICATION

(11) **EP 0 256 827 B1**
(45) Date of publication and mention of the grant of the patent: **07.01.1993**
(21) Application number: 87307067.6
(22) Date of filing: 10.08.1987
(51) Int. Cl.: G11B 7/125

(54) **Apparatus for recording and reproducing data into/from an optical disc**
Gerät zur Datenaufzeichnung und -wiedergabe auf oder von einer optischen Platte
Appareil d'enregistrement et de reproduction de données sur disque optique

(30) Priority: 13.08.1986 JP 188388/86
(43) Date of publication of application: 24.02.1988
(73) Proprietor: SONY CORPORATION, Tokyo 141 (JP)
(72) Inventor: Kobayashi, Seiji, Shinagawa-ku Tokyo (JP); Ohsato, Kiyoshi, Shinagawa-ku Tokyo (JP)
(74) Representative: Ayers, Martyn Lewis Stanley

(56) References cited:
- EP-A- 0 048 041
- EP-A- 0 169 579
- IBM TECHNICAL DISCLOSURE BULLETIN, vol. 29, no. 6, November 1986, pages 2734-2735, "Erase power calibration of magneto-optic media"
- PATENT ABSTRACTS OF JAPAN, vol. 9, no. 214 (P-384), 31st August 1985 & JP-A-60 74124

## Description

The present invention relates to an apparatus for recording and reproducing data into/from an optical disc in which data based on an information signal can be erased and rerecorded and, more particularly but not exclusively, to the control of the output of a laser diode for use in a light source of such a data recording and reproducing apparatus.

Read-only optical discs (e.g., compact disc, optical video disc, etc.) are known in which data based on various kinds of information signals cannot be erased and rerecorded at all, as are write-once type optical discs in which data can be recorded but cannot be erased, and optical discs in which data based on various kinds of information signals can be erased and rerecorded. For example, on type of such a disc is a magneto-optic disc. In a magneto-optic disc, data is recorded by the direction of magnetization in a manner similar to the perpendicular magnetic recording system. Namely, in a magneto-optic disc, a perpendicular magnetization film in which the magnetization direction is oriented perpendicularly to the disc surface is used as a recording medium. This recording medium has a coercive force at ordinary temperatures, the magnetization direction does not change, and in the initial state before data is recorded and in the state in which previously recorded data has been erased, the magnetization direction is orientated in a constant direction. When a recording beam, e.g., a laser beam is irradiated onto the recording medium, the temperature of the beam irradiated portion rapidly increases. When the temperature has reached a Curie temperature or compensation temperature, the coercive force decreases. At the same time, a weak magnetic field is applied from the outside by an external magnetic field generating means. In this state, by irradiating with the recording beam, e.g., laser beam onto the recording medium of the disc, the temperature of the beam irradiated portion promptly increases and the magnetization direction of the recording medium is reversed in accordance with the direction of the magnetic field generated from the external magnetic field generating means. Thus, data is written. In the case of reading data, a reproducing beam, e.g., a laser beam having a power which is sufficiently smaller than the irradiation power when data is written is irradiated onto the disc, and the rotational angle of the rectilinear plane of polarization of the reflected light is detected.

When erasing the data written in the disc, the direction of the magnetic field which is generated from the external magnetic field generating means is held constant and at the same time, by irradiating with an erasing beam, e.g., a laser beam onto a desired portion of the recording medium of the disc, the magnetization direction of the recording medium is oriented to a constant direction in accordance with the direction of the magnetic field generated from the external magnetic field generating means on a basis similar to that when data is written. In this manner, data is erased.

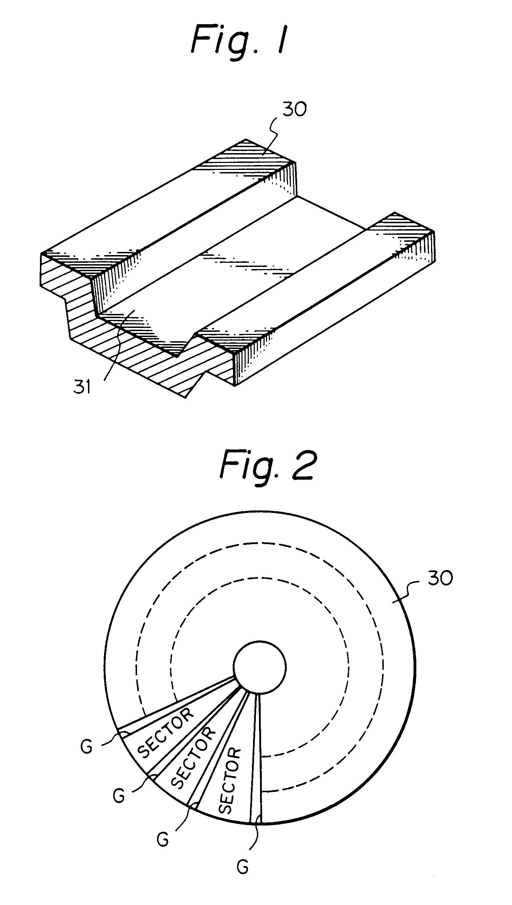

Hitherto, as shown in Fig. 1 of the accompanying drawings, a guide groove 31 for tracking is formed in such an erasable and rerecordable optical disc 30. A laser beam is emitted from a laser light source of an optical head (not shown) which can be freely moved in the radial direction of the optical disc. A tracking servo is applied to an objective lens drive apparatus (not shown) of the optical head so that the emitted laser beam can trace along the guide groove 31, so that data is recorded along the guide groove 31. As shown in Fig. 2, an area of the disc 30 is divided into, e.g., 32 sectors per rotation. Data is read out of, or written into, every sector.

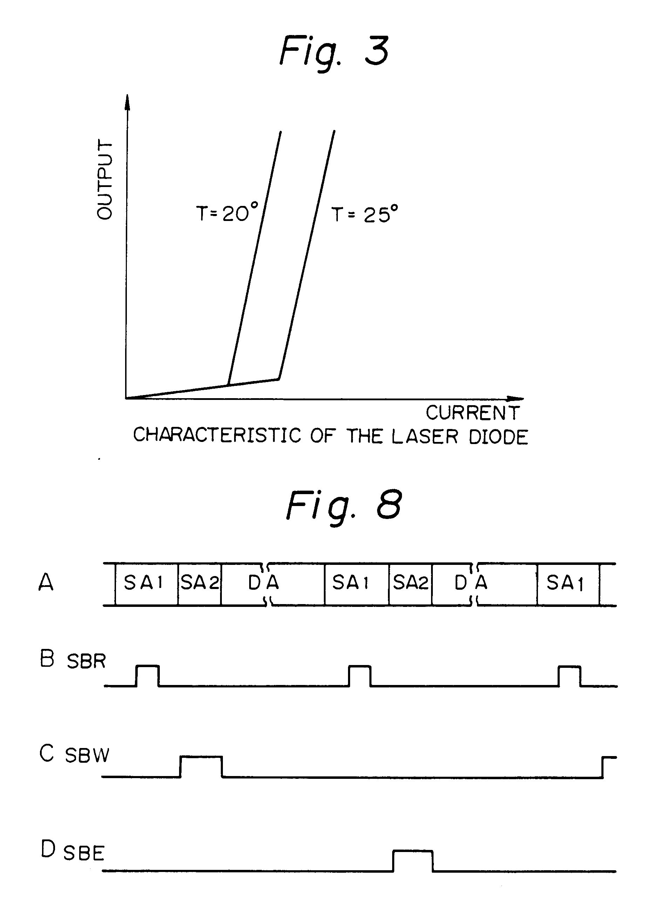

In the case of an erasable and rerecordable optical disc, as mentioned above, a laser beam is used to read out and write data. A laser diode can be used as the laser beam emitting source. The optimum value of the power of the laser beam differs in each of the reading, writing, and erasing modes. Namely, as mentioned above, in the case of writing data, in order to reverse the magnetization direction of the recording medium of the optical disc, the laser beam from the laser diode irradiated onto the recording medium needs to raise the temperature of medium to a temperature near the Curie temperature or the compensation temperature. Therefore, the largest power is necessary in the writing mode. If a sufficient large power is not obtained in the writing mode, the temperature of the irradiated portion of the recording medium does not reach the Curie temperature, so that the magnetization direction cannot be reversed. Therefore, data is not adequately written. On the other hand, if the power is too large in the reading mode, further data may be written by the reading laser beam onto data which has already been written onto the disc, so that the written data may be corrupted. As shown in Fig. 3, the power of a laser diode changes a great amount with its temperature and it can also vary by a large amount with the elapse of time.

Therefore, when using a laser diode in a laser light source of an apparatus for recording and reproducing data into/from an optical disc, it is necessary to use a servo circuit adapted to keep the power of the laser diode at an optimum value. Such a servo circuit is called an automatic power control (APC) circuit.

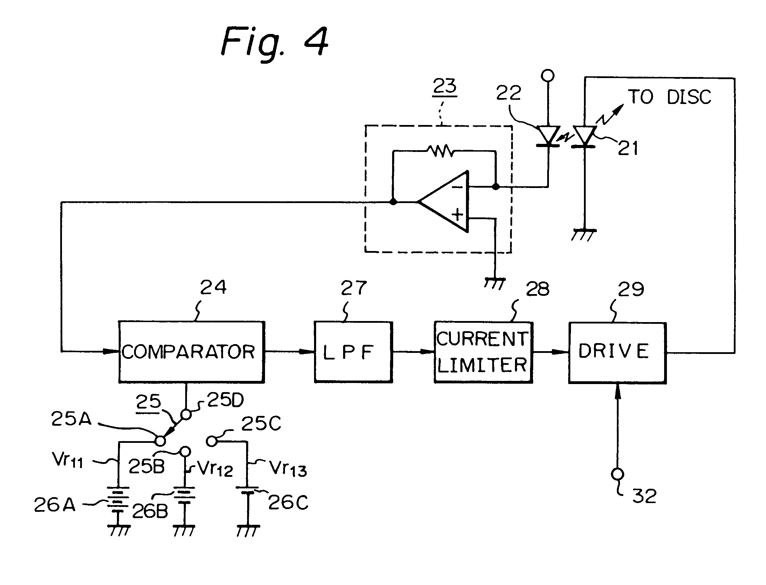

Fig. 4 shows an example of an APC circuit for use in a conventional magneto-optic disc recording and reproducing apparatus. In Fig. 4, a laser diode 21 is a light source. A laser beam from the laser diode 21 is irradiated onto a magneto-optic disc. The light emission power of the laser diode 21 is detected by a monitoring photo diode 22 disposed near the laser diode 21.

In general, light fluxes corresponding to the intensity of the emitted laser beam are also emitted from both of the edge surfaces of the laser diode to emit a laser beam onto the disc side and the edge surface on the opposite side (these fluxes are referred to as "monitor lights". These monitor lights are detected by the photo diode 22. The intensity of the monitor lights received by the photo diode 22 varies according to the light emission power of the laser diode 21 and a current corresponding to the received monitor lights flows through the photo diode 22.

The detection current of the photo diode 22 is converted into a voltage value by a current-voltage (I-V) converting circuit 23. An output of the I-V converting circuit 23 is supplied to a comparator 24. Target voltages Vr₁₁, Vr₁₂, and Vr₁₃ are selectively supplied to the comparator 24 through a switch 25 depending on the operating mode (writing/erasing/reading). Namely, when terminals 25A and 25D of the switch 25 are connected, the target voltage Vr₁₁ in the writing mode is supplied from a voltage source 26A to the comparator 24. When terminals 25B and 25D are connected, the target voltage Vr₁₂ in the erasing mode is supplied from a voltage source 26B to the comparator 24. When terminals 25C and 25D are connected, the target voltage Vr₁₃ in the reading mode is supplied from a voltage source 26C to the comparator 24. In this manner, each target voltage is selectively supplied to the comparator 24 by switch 25 whose switching operation is controlled by control means (not shown) in accordance with each of the writing, erasing, and reading modes.

The output of the comparator 24 is supplied to a current limiter 28 through a low pass filter 27. The current limiter 28 is provided to prevent excessive current flow through the laser diode 21 which would damage it. An output of the current limiter 28 is supplied to a drive circuit 29. An output of the drive circuit 29 is supplied to the laser diode 21. A laser beam corresponding in intensity to the output of the drive circuit 29 is emitted from the laser diode 21 and irradiated onto a magneto-optic disc.

In the writing mode, a modulation signal based on an information signal to be recorded is supplied from a terminal 32 to the drive circuit 29. Thus, the laser beam is modulated by the modulation signal and the switch 25 is switched by control means (not shown) and a beam having a predetermined power in the writing mode is generated by the laser diode 21.

As mentioned above, the output of the laser diode 21 is detected by the photo diode 22. The detection output of the photo diode 22 is compared with the target value in each of the writing, erasing, and reading modes by the comparator 24. The light emission output of the laser diode 21 is controlled so as to become constant at the target value in each of the writing, erasing, and reading modes in accordance with the output of the comparator 24.

However, it takes a time for the APC circuit to become stable. Namely, for example, when the operating mode was changed from the reading mode to the writing mode, the target voltage is switched from Vr₁₃ to Vr₁₁ and the light emission power of the laser diode 21 is increased. However, the power of the laser diode 21 does not immediately rise to the target value in the writing mode from the target value in the reading mode and is not stable until it reaches the target value. Therefore, as shown in Fig.2, a conventional optical disc is provided with a gap G between sectors. No effective data is recorded in the gap G. After the operation of the APC circuit stabilizes, the writing, reading, or erasing operation is performed.

Therefore, in a conventional optical disc, since the gap G in which no effective data is recorded needs to be provided between sectors to allow the APC circuit to become stable, the usable recording area of the recording medium of the disc is restricted, thus limiting the recording density. Further, as mentioned above, the guide groove 31 for tracking is provided in a conventional optical disc. Such a guide groove 31 causes the problems that noise from the guide groove 31 is picked up, the carrier-to-noise (C/N) ratio deteriorates and the reliability of data also deteriorates. To avoid such problems, a method whereby a tracking servo is applied without forming the guide groove 31 has been considered. For example, as disclosed in U.S.P. No. 4,443,870 and the like, a plurality of servo areas are provided in a disc and servo pits for tracking are formed in the servo areas. The tracking servo is applied in the servo area interval on the basis of tracking error information which is obtained from the servo pits.

In the case where the tracking error is detached from the servo pits in the servo area and tracking is controlled as described above, the response speed of the APC circuit becomes a problem. Namely, in the case where the tracking control was performed by the foregoing method, the servo area is set into the reading mode in order to read out the servo pits. Since the servo area enters the reading mode, in the case of writing data into a disc, it is necessary to set the power of the laser diode at the optimum value in the reading mode in the servo area and the power of the laser diode needs to be immediately set to the optimum value in the writing mode in a recording area. Namely, in Fig. 4, the terminals 25C and 25D are connected when reading the servo area and the terminals 25A and 25D are connected when writing in the recording area. However, since it takes a predetermined time until the operation of the APC circuit becomes stable, when the laser is being moved from the servo area to the recorded area, the power of the laser diode does not promptly become the optimum value.

Therefore, it is proposed that a gap such as the gap G provided between sectors as shown in Fig. 2 is formed between the servo area and the recording area. However, the formation of gaps again results in a decrease in recording density of the disc in a manner similar to the case of the optical disc in Fig. 2.. Consideration has also been given to omitting the low pass filter 27 in order to increase the operating speed of the APC circuit. However, using this method, the operation of the APC circuit is not stable.

EP-A-0169579 discloses a semiconductor laser drive circuit in accordance with the pre-characterizing portion of claim 4 in which a detector is used to sample and hold the level of light emitted from a disc which level is compared to a preset level and laser drive means controls the laser output to match the present level.

It is an object of the present invention to provide an apparatus for recording and reproducing data into/from an optical disc in which the power of the laser beam can be instantaneously controlled to the optimum value in each of the writing, reading and erasing modes with reducing a recording density.

According to a first aspect of the present invention, there is provided an optical data recording and reproducing system as defined in claim 1 comprising an optical disc and an apparatus for recording and reproducing data onto/from said disc, the disc comprising a data area and a plurality of servo areas each servo area including an extracting area for use by the apparatus in setting the recording and reproducing light levels,
and the apparatus comprising a detector for detecting the light emission power of a laser light source;
power setting means for comparing the detected light emission power with a target value, and for setting the light emission power of the laser light source on the basis of a comparison output; and
drive means for driving said laser light source on the basis of the power set by said power setting means;
wherein the power setting means comprises recording power setting means for setting the power of said laser light source when data is recorded into said optical disc, said recording power setting means consisting of a first sample and hold circuit to sample and hold the detection output from said detector detecting the light emission power from the extracting area, a first comparator to compare an output of said first sample and hold circuit with a first target value, and a first filter which is supplied with a comparison output of said first comparator; and
reproducing power setting means for setting the power of said laser light source when the data recorded in the optical disc is reproduced, said reproducing power setting means consisting of a second sample and hold circuit to sample and hold the detection output from the detector detecting the light emission power from the extracting area, a second comparator to compare an output of said second sample and hold circuit with a second target value, and a second filter which is supplied with a comparison output of said second comparator.

A second aspect of the invention provides an apparatus as defined in claim 4 for recording and reproducing data into/from an optical disc, the apparatus comprising:
a detector for detecting the light emission power of a laser light source;
power setting means for comparing the detected light emission power with a target value, and for setting the light emission power of the laser light source on the basis of a comparison output; and
drive means for driving said laser light source on the basis of the power set by said power setting means; wherein the power setting means is arranged to sample and hold the detection output from the detector to compare said sampled and held value with a target value, and to set the light emission power of the laser light source on the basis of a comparison output; characterized in that said power setting means comprises:
recording power setting means for setting the power of said laser light source when data is recorded into said optical disc, said recording power setting means consisting of a first sample and hold circuit to sample and hold the detection output from said detector, a first comparator to compare an output of said first sample and hold circuit with a first target value, and a first filter which is supplied with a comparison output of said first comparator; and
reproducing power setting means for setting the power of said laser light source when the data recorded in the optical disc is reproduced, said reproducing power setting means consisting of a second sample and hold circuit to sample and hold the detection output from the detector, a second comparator to compare an output of said second sample and hold circuit with a second target value, and a second filter which is supplied with a comparison output of said second comparator.

Another aspect of the present invention provides an optical disc as defined in claim 7 having an optical recording area which consists of a plurality of tracks and into which an information signal can be optically recorded, wherein a part of the recording area of the disc includes data areas in which information is recorded and servo areas including a control area including pits offset with respect to the track for use by recording/reproducing apparatus for tracking control, and a first extracting area comprising a space having no pits for use by the apparatus in light control, characterized in that the data areas immediately follow the servo areas with no sector gap provided between the servo areas and data areas.

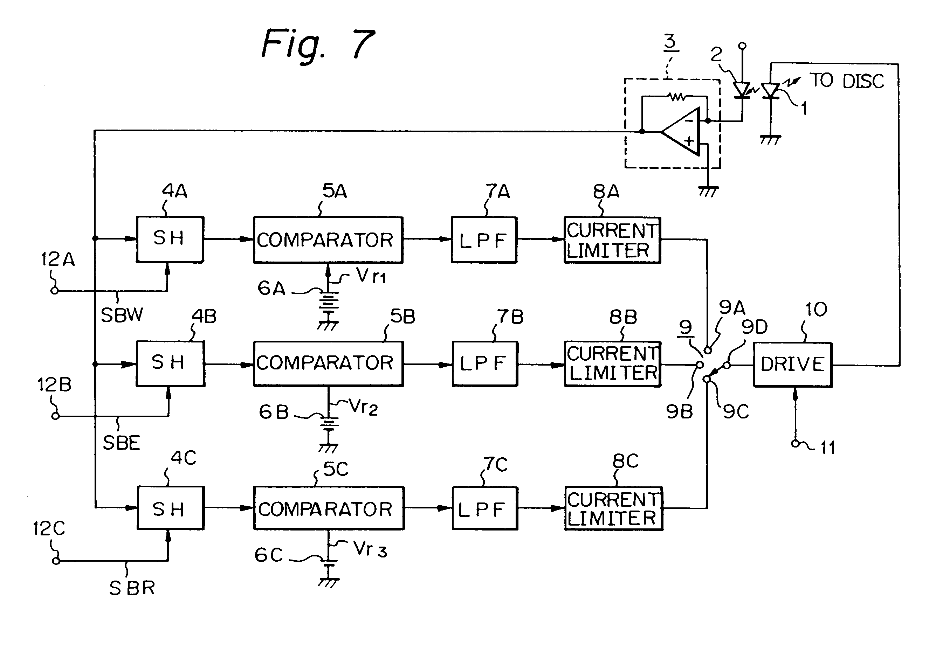

Thus, as shown in the embodiment of Figure 7, the power of the laser diode 1 is detected by the photo diode 2. The detection output in a servo area SA1 is held in a sample and hold circuit 4C. The detection output in a servo area SA2 is stored in sample and hold circuits 4A and 4B. The power of the laser diode 1 in the reading mode is controlled on the basis of the detection output held in the sample and hold circuit 4C. The powers of the laser diode 1 in the writing and erasing modes are controlled on the basis of the detection outputs held in the sample and hold circuits 4A and 4B. Due to this, the APC loop in the writing, erasing, or reading mode becomes stable. Therefore, when the operating mode is switched, the light emission power of the laser diode 1 can be immediately set to a target value.

The above and other features, and advantages of the present invention will be more apparent from the following detailed description in conjunction with the accompanying drawings, in which:-
Fig.1 is a perspective view illustrating the guide groove in a conventional optical disc;
Fig.2 is a perspective view illustrating a conventional optical disc;
Fig.3 is a graph showing the operating characteristics of a laser diode;
Fig.4 is a block diagram showing a conventional APC circuit;
Fig.5 is a schematic diagram illustrating an optical disc which is used in an embodiment of the present invention;
Fig.6 is a schematic diagram illustrating a servo area of a disc to be used with an embodiment of the invention;
Fig.7 is a block diagram of an embodiment of the invention; and
Fig.8 is a timing chart for explaining the embodiment of Figure 7.

An embodiment of the present invention will be described hereinbelow with reference to the drawings.

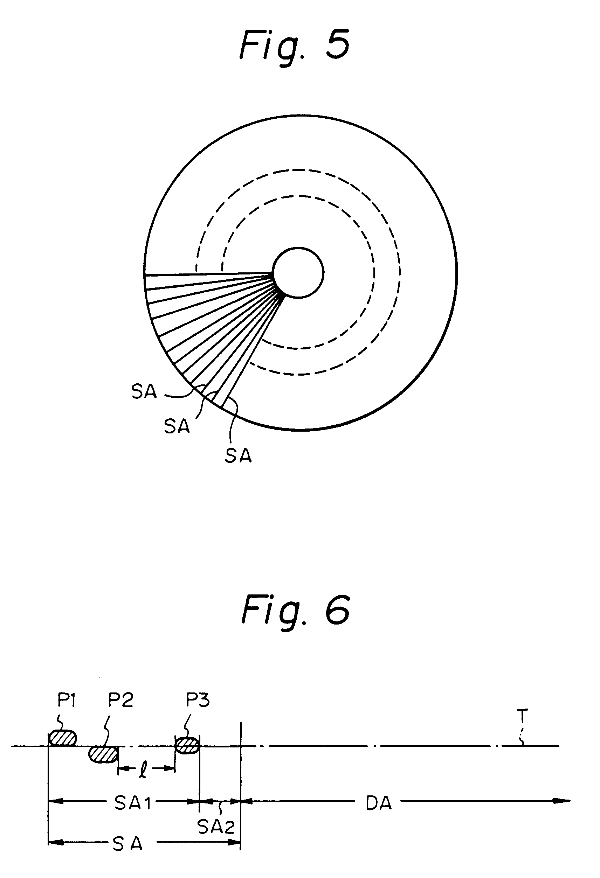

The illustrated embodiment of the invention is applied to an apparatus for recording and reproducing data into/from an erasable and rerecordable optical disc, e.g., a magneto-optic disc. As shown in Fig.5, a magneto-optic disc which is used with the embodiment is formed with a plurality of, e.g., 1300 servo areas SA per circumference. In the servo area SA, tracking control is performed for an objective lens drive apparatus (not shown) of an optical head (not shown) which is controlled such that a laser beam emitted from a laser diode is focused onto the surface of a recording medium of a magneto-optic disc. Therefore, a guide groove for a tracking servo such as shown in Fig.1 is not provided. The servo area SA further consists of a servo area SA₁ and a servo area SA₂. As shown in Fig.6, pits P₁, P₂, and P₃ are formed in the servo area SA₁. The pits P₁ and P₂ are used to perform tracking control for the objective lens drive apparatus. Namely, the pits P₁ and P₂ are arranged at positions which deviate in the opposite directions from the centre of track T. When a laser beam passes over the pits P₁ and P₂, the operating mode is set to the reading mode and tracking servo is applied to the objective lens drive apparatus so that the signals reproduced from the pits P₁ and P₂ are equalized. Thus, the laser beam scans the centre between the pits P₁ and P₂, i.e., the centre line of the track T. The pit P₃ is provided to form a reference signal to reproduce a bit clock. An area in which no pit is formed is provided in the portion between the pit P₂ and the pit P₃. Subsequent to the servo area SA₁, the servo area SA₂ is provided. The area in which no pit is formed and the servo area SA₂ are provided to control the operation of the APC circuit of the laser diode and will be explained in detail hereinafter.

Fig.7 shows an embodiment of the invention. In Fig.7, reference numeral 1 denotes a laser diode. A laser beam emitted from the laser diode 1 is irradiated onto an optical disc. The light emission power of the laser diode 1 is detected by a monitoring photo diode 2 disposed near the laser diode 1 as mentioned above. Namely, the light fluxes which are emitted from the edge surfaces of the laser diode while it is irradiated onto the magneto-optic disc are received by the photo diode 2. Thus, a current corresponding to the received light fluxes flows through the photo diode 2. The current flowing through the photo diode 2 is converted into a voltage value by an I-V converting circuit 3. An output of the I-V converting circuit 3 is supplied to sample and hold circuits 4A, 4B and 4C.

Sampling pulses SBW, SBE, and SBR are respectively supplied from terminals 12A, 12B and 12C to the sample and hold circuits 4A, 4B and 4C. The sampling pulses SBW, SBE and SBR are generated at timings as shown in Fig.8. When the sampling pulses SBW, SBE and SBR are respectively set to the high level, the output of the I-V converting circuit 3 is sampled and held in the corresponding one of the sample and hold circuits 4A, 4B and 4C.

The outputs of the sample and hold circuits 4A, 4B and 4C are supplied to comparators 5A, 5B, and 5C respectively. Target voltages Vr₁, Vr₂ and Vr₃ are applied from voltage sources 6A, 6B and 6C to the comparators 5A, 5B and 5C respectively. The voltage Vr₁ corresponds to the target power in the writing mode. The voltage Vr₂ corresponds to the target power in the erasing mode. The voltage Vr₃ corresponds to the target power in the reading mode.

Comparison outputs of the comparators 5A, 5B, and 5C are supplied to current limiters 8A, 8B and 8C through low pass filters 7A, 7B, and 7C, respectively. The current limiters 8A to 8C are provided to prevent damaging excessive currents from passing through the laser diode 1. Outputs of the current limiters 8A to 8C are selectively supplied to a drive circuit 10 through a switch 9. The switch 9 is appropriately switched by control means (not shown) in accordance with the reading, erasing or writing mode. Namely, terminals 9A to 9D of the switch 9 are connected in the writing mode and the output of the current limiter 8A is supplied to the drive circuit 10. In the erasing mode, terminals 9B and 9D are connected and the output of the current limiter 8B is supplied to the drive circuit 10. In the reading mode, terminals 9C and 9D are connected and the output of the current limiter 8C is supplied to the drive circuit 10. Thus, an output of the drive circuit 10 corresponding to the output from the current limiter connected by the switch 9 is supplied to the laser diode 1. The light emission power of the laser diode 1 is controlled in accordance with the output of the drive circuit 10. A laser beam modulated by the modulation signal is set to the optimum power level in the writing mode on the basis of the output of the current limiter 8A by the switch 9 and output from the laser diode 1. This laser beam is irradiated onto the recording medium of the disc.

The operation of the illustrated embodiment of the invention will be described.

As mentioned above, the servo area SA₁ and the servo area SA₂ subsequent to the servo area SA₁ are formed in the magneto-optic disc. Therefore, when the magneto-optic disc is rotated by rotation driving means (not shown), as shown in Fig.8A, the laser beam from the laser diode 1 scans the servo areas SA₁ and SA₂ between data areas DA. As shown in Fig.8B, the sampling pulse SBR which is supplied to the sample and hold circuit 4C is set to the high level for the period of time corresponding to the area ℓ in which no pit is formed in the servo area SA₁. The sampling pulsed SBW and SBE which are supplied to the sample and hold circuits 4A and 4B area alternately set to the high level every area for the period of time corresponding to the servo area SA₂ as shown in Figs.8C and 8D.

Therefore, in the area ℓ in the servo area SA₁, the detection output of the photo diode 2 is held in the sample and hold circuit 4C. The output of the sample and hold circuit 4C is compared with the target value Vr₃ by the comparator 5C. The comparison output is supplied to the low pass filter 7C.

In the servo area SA₂, the detection output of the photo diode 2 is alternately held in the sample and hold circuits 4A and 4B for each area. The outputs of the sample and hold circuits 4A and 4B are respectively supplied to the comparators 5A and 5B. The comparison outputs of the comparators 5A and 5B are supplied to the low pass filters 7A and 7B, respectively.

The power of the laser diode 1 is controlled to the optimum value in the reading mode on the basis of the detection output of the photo diode 2 in the area in the servo area SA₁. The power of the laser diode 1 is controlled to the optimum power in each of the writing and erasing modes on the basis of the detection output of the photo diode 2 in the servo area SA₂. The detection output in the area ℓ in the servo area SA₁ and the detection output in the servo area SA₂ are sampled and held in the sample and hold circuits 4A, 4B and 4C a plurality of times. These detection outputs are sequentially compared with the target values by the comparators 5A, 5B, and 5C, thereby enabling the automatic power control to become stable. The optimum values in the writing, erasing, and reading modes are stored in the low pass filters 7A, 7B and 7C respectively.

In this manner, the optimum values in the writing, erasing, and reading modes are respectively stored in the low pass filters 7A, 7B and 7C. The automatic power control loops in the writing, erasing, and reading modes are respectively stable. Thus, when the operating mode is switched among the writing, erasing and reading modes by control means (not shown), the output of the laser diode 1 is immediately set to the appropriate target value in correspondence to the switched mode.

In the foregoing embodiment, the detection output is alternately held in the sample and hold circuits 4A and 4B for each area in the servo area SA₂. In general, since the time-dependent change component of the laser diode 1 is sufficiently low, no problem occurs even if the detection output is alternately sampled for each area in this manner. It is also possible to divide the servo area SA₂ into an interval to sample and hold into the sample and hold circuit 4A and an interval to sample and hold into the sample and hold circuit 4B. It is sufficient that the length of the servo area SA₂ is set to a value corresponding to only a time long enough to sample the peak value of the photo diode 2; therefore, it may be a very short length of, e.g., one pit. Accordingly, the deterioration in usable storage area by providing the servo area SA₂ does not cause a problem.

Further, in the foregoing embodiment, the laser diode 1 in the reading mode is controlled by use of the detection output which was sampled in the area ℓ in which no pit is formed. Therefore, the laser diode 1 can be controlled in the optimum state without being influenced by modulation components due to the guide groove.

The embodiment of the invention has been described with respect to a magneto-optic disc recording and reproducing apparatus of the optical modulation system in which by supplying a modulation signal based on an information signal to the drive circuit 10 of the laser diode 1, a laser beam emitted from the laser diode 1, i.e., a recording beam is modulated, thereby recording the information signal. However, the invention can be also applied to a magnetic field modulation system in which a modulation signal based on an information signal is supplied to external magnetic field generating means (not shown) which is used to reverse the magnetization direction and a drive signal at a DC level necessary to record or erase is supplied from the drive circuit 10 to the laser diode 1. Further the invention is not limited to only a magneto-optic disc, but can be also applied to unerasable optical discs of the phase transition type, write-once type and the like.

According to the invention, the detection output in the servo area SA₁ is sampled and held in the sample and hold circuit 4C and the detection output in the servo area SA₂ is sampled and held in the sample and hold circuits 4A and 4B. The power of the laser diode 1 in the reading mode is controlled on the basis of the detection outputs sampled and held in the sample and hold circuit 4C. The power of the laser diode 1 in the writing and reading modes is controlled on the basis of the detection outputs sampled and held in the sample and hold circuits 4A and 4B. Therefore, when the operating mode is switched between the writing, erasing, and reading modes, the power of the laser diode 1 can be immediately set to the required target value.

On the other hand, according to the invention, control loops in the reading, writing and erasing modes are individually constituted. Therefore, the characteristic of the loop in each mode can be optimized.

In addition, since the control loop is individually controlled in each mode, the current limiters 8A, 8B and 8C can be optimized in each mode and reliability can improved.

Therefore, the recording area of a disc can be effectively used without decreasing recording density of disc. The additional time until the power of the laser diode rises is eliminated. Even if the operating mode is switched, the power of the laser diode immediately rises. Therefore, an apparatus having a high response speed can be realized.

## Claims

1. An optical data recording and reproducing system comprising an optical disc and an apparatus for recording and reproducing data onto/from said disc, the disc comprising a data area (DA) and a plurality of servo areas (SA) each servo area (SA) including an extracting area for use by the apparatus in setting the recording and reproducing light levels,
and the apparatus comprising a detector (2, 3) for detecting the light emission power of a laser light source (1);
power setting means (4A-C, 5A-C, 6A-C, 7A-C, 8A-C) for comparing the detected light emission power with a target value, and for setting the light emission power of the laser light source (1) on the basis of a comparison output; and
drive means (10) for driving said laser light source (1) on the basis of the power set by said power setting means (4A-C, 5A-C, 6A-C, 7A-C, 8A-C);
wherein the power setting means (4A-C, 5A-C, 6A-C, 7A-C, 8A-C) comprises recording power setting means (4A, 5A, 6A, 7A) for setting the power of said laser light source (1) when data is recorded into said optical disc, said recording power setting means (4A, 5A, 6A, 7A, 8A) consisting of a first sample and hold circuit (4A) to sample and hold the detection output from said detector (2, 3) detecting the light emission power from the extracting area (SA1, SA2), a first comparator (5A) to compare an output of said first sample and hold circuit (4A) with a first target value, and a first filter (7A) which is supplied with a comparison output of said first comparator (5A); and
reproducing power setting means (4C, 5C, 6C, 7C) for setting the power of said laser light source (1) when the data recorded in the optical disc is reproduced, said reproducing power setting means (4C, 5C, 6C, 7C) consisting of a second sample and hold circuit (4C) to sample and hold the detection output from the detector (2, 3) detecting the light emission power from the extracting area (SA1, SA2), a second comparator (5C) to compare an output of said second sample and hold circuit (4C) with a second target value, and a second filter (7C) which is supplied with a comparison output of said second comparator (5C).

2. A system according to claim 1, wherein said power setting means (4A-C, 5A-C, 6A-C, 7A-C, 8A-C) has erasing power setting means (4B, 5B, 6B, 7B, 8B) for setting a power of said laser light source when the data recorded on the optical disc is to be erased, and said erasing power setting means (4B, 5B, 6B, 7B, 8B) consists of a third sample and hold circuit (4B) to sample and hold the detection output from said detector (2, 3), a third comparator (5B) to compare and output of said third sample and hold circuit with a target value for erasing the data, and a third filter (7B) which is supplied with a comparison output of said third comparator (7B).

3. A system according to claim 2, wherein said power setting means (4A-C, 5A-C, 6A-C, 7A-C, 8A-C) has switching means (9) for selectively switching the outputs of said recording power setting means (4A, 5A, 6A, 7A, 8A), said reproducing power setting means (4C, 5C, 6C, 7C, 8C), and said erasing power setting means (4B, 5B, 6B, 7B, 8B), in accordance with each of the recording, reproducing, and erasing modes and for supplying to said drive means (10).

4. An apparatus for recording and reproducing data into/from an optical disc, the apparatus comprising:
a detector (2, 3) for detecting the light emission power of a laser light source (1);
power setting means (4A-C, 5A-C, 6A-C, 7A-C, 8A-C) for comparing the detected light emission power with a target value, and for setting the light emission power of the laser light source (1) on the basis of a comparison output; and
drive means (10) for driving said laser light source (1) on the basis of the power set by said power setting means (4A-C, 5A-C, 6A-C, 7A-C, 8A-C); wherein the power setting means (4A-C, 5A-C, 6A-C, 7A-C, 8A-C) is arranged to sample and hold the detection output from the detector (2, 3) to compare said sampled and held value with a target value, and to set the light emission power of the laser light source (1) on the basis of a comparison output; characterized in that said power setting means (4A-C, 5A-C, 6A-C, 7A-C, 8A-C) comprises:
recording power setting means (4A, 5A, 6A, 7A) for setting the power of said laser light source (1) when data is recorded into said optical disc, said recording power setting means (4A, 5A, 6A, 7A, 8A) consisting of a first sample and hold circuit (4A) to sample and hold the detection output from said detector (2, 3), a first comparator (5A) to compare an output of said first sample and hold circuit (4A) with a first target value, and a first filter (7A) which is supplied with a comparison output of said first comparator (5A); and
reproducing power setting means (4C, 5C, 6C, 7C) for setting the power of said laser light source (1) when the data recorded in the optical disc is reproduced, said reproducing power setting means (4C, 5C, 6C, 7C) consisting of a second sample and hold circuit (4C) to sample and hold the detection output from the detector (2, 3), a second comparator (5C) to compare an output of said second sample and hold circuit (4C) with a second target value, and a second filter (7C) which is supplied with a comparison output of said second comparator (5C).

5. An apparatus according to claim 4, wherein said power setting means (4A-C, 5A-C, 6A-C, 7A-C, 8A-C) has erasing power setting means (4B, 5B, 6B, 7B, 8B) for setting a power of said laser light source when the data recorded on the optical disc is to be erased, and said erasing power setting means (4B, 5B, 6B, 7B, 8B) consists of a third sample and hold circuit (4B) to sample and hold the detection output from said detector (2, 3), a third comparator (5B) to compare and output of said third sample and hold circuit with a target value for erasing the data, and a third filter (7B) which is supplied with a comparison output of said third comparator (7B).

6. An apparatus according to claim 5, wherein said power setting means (4A-C, 5A-C, 6A-C, 7A-C, 8A-C) has switching means (9) for selectively switching the outputs of said recording power setting means (4A, 5A, 6A, 7A, 8A), said reproducing power setting means (4C, 5C, 6C, 7C, 8C), and said erasing power setting means (4B, 5B, 6B, 7B, 8B), in accordance with each of the recording, reproducing, and erasing modes and for supplying to said drive means (10).

7. An optical disc having an optical recording area which consists of a plurality of tracks (T) and into which an information signal can be optically recorded, wherein a part of the recording area of the disc includes data areas in which information is recorded and servo areas (SA) including a control area (SA1) including pits (P1, P2) offset with respect to the track for use by recording/reproducing apparatus for tracking control, and a first extracting area (1) comprising a space having no pits for use by the apparatus in light control, characterized in that the data areas (DA) immediately follow the servo areas (SA) with no sector gap provided between the servo areas (SA) and data areas (DA).

8. An optical disc according to claim 7, wherein said control area (SA1) is provided in said recording area on the upstream side with respect to the tracking direction of a second extracting area (SA2).

9. An optical disc according to claim 7 or 8 wherein downstream with respect to the tracking direction of said control area is said first part extracting area (1), downstream of which is a pit (P3) for timing control and downstream of which is a second extracting area (SA2) immediately followed by the data area (DA).

## Patentansprüche

1. Optisches System zur Datenaufzeichnung und -wiedergabe, das eine optische Platte und eine Vorrichtung zur Datenaufzeichnung und -wiedergabe auf oder von der genannten Platte umfaßt, wobei die Platte einen Datenbereich (DA) und eine Vielzahl von Servobereichen (SA) aufweist, von denen jeder Servobereich (SA) einen Abfragebereich für die Benutzung durch die Vorrichtung, um die Aufzeichnungs- und Wiedergabelichtpegel einzustellen, enthält.
und wobei die Vorrichtung einen Detektor (2, 3) zum Detektieren der Lichtemissionsleistung einer Laserlichtquelle (1),
Mittel zur Leistungseinstellung (4A-C, 5A-C, 6A-C, 7A-C, 8A-C) zum Vergleichen der detektierten Lichtemissionsleistung mit einem Zielwert, und zum Einstellen der Lichtemissionsleistung der Laserlichtquelle (1) auf der Grundlage eines Vergleichsausgangssignals, und
Ansteuerungsmittel (10) zum Ansteuern der genannten Laserlichtquelle (1) auf der Grundlage der Leistungseinstellung durch die genannten Mittel zur Leistungseinstellung (4A-C, 5A-C, 6A-C, 7A-C, 8A-C) umfaßt,
in welcher die Mittel zur Leistungseinstellung (4A-C, 5A-C, 6A-C, 7A-C, 8A-C) Mittel zur Einstellung der Aufzeichnungsleistung (4A, 5A, 6A, 7A, 8A) zum Einstellen der Leistung der genannten Laserlichtquelle, wenn Daten auf die optische Platte aufgezeichnet werden, enthalten, wobei die genannten Mittel zur Einstellung der Aufzeichnungsleistung (4A, 5A, 6A, 7A, 8A) aus einer ersten Abtast-Halte-Schaltung (4A) zum Abtasten und Halten des Detektionsausgangssignals des genannten Detektors (2, 3), der die Lichtemissionsleistung von dem Abfragebereich (SA1, SA2) detektiert, einem ersten Komparator (5A) zum Vergleichen eines Ausgangssignals der genannten ersten Abtast-Halte-Schaltung (4A) mit einem ersten Zielwert, und einem ersten Filter (7A), an das ein Vergleichsausgangssignal des ersten Komparators (5A) angelegt wird, bestehen, und
Mittel zur Einstellung der Wiedergabeleistung (4C, 5C, 6C, 7C, 8C) zur Einstellung der Leistung der genannten Laserlichtquelle (1), wenn die auf der optischen Platte aufgezeichneten Daten wiedergegeben werden, wobei die genannten Mittel zur Einstellung der Wiedergabeleistung (4C, 5C, 6C, 7C, 8C) aus einer Abtast-Halte-Schaltung (4C) zum Abtasten und Halten des Detektionsausgangssignal des Detektors (2, 3), der die Lichtemissionsleistung von dem Abfragebereich (SA1, SA2) detektiert, einem zweiten Komparator (5C) zum Vergleichen eines Ausgangssignals der zweiten Abtast-Halte-Schaltung (4C) mit einem zweiten Zielwert, und einem zweiten Filter (7C), an das ein Vergleichsausgangssignal des zweiten Komparators (5C) angelegt wird, bestehen.

2. System nach Anspruch 1, bei dem die genannten Mittel zur Leistungseinstellung (4A-C, 5A-C, 6A-C, 7A-C, 8A-C) Mittel zur Einstellung der Löschleistung (4B, 5B, 6B, 7B, 8B) zum Einstellen einer Leistung der genannten Laserlichtquelle besitzen, wenn die auf der optischen Platte aufgezeichneten Daten gelöscht werden sollen, und wobei die genannten Mittel zur Einstellung der Löschleistung (4B, 5B, 6B, 7B, 8B) aus einer dritten Abtast-Halte-Schaltung zum Abtasten und Halten des Detektionsausgangssignals des genannten Detektors (2, 3), einem dritten Komparator (5B) zum Vergleichen und Ausgeben der genannten dritten Abtast-Halte-Schaltung mit einem Zielwert zum Löschen der Daten, und einem dritten Filter (7B), an das ein Vergleichsausgangssignal des genannten dritten Komparators (7B) angelegt wird, bestehen.

3. System nach Anspruch 2, bei dem die genannten Mittel zur Leistungseinstellung (4B, 5B, 6B, 7B, 8B) Schaltmittel (9) zum selektiven Durchschalten der Ausgangssignale der genannten Mittel zur Einstellung der Aufzeichnungsleistung (4A, 5A, 6A, 7A, 8A), der genannten Mittel zur Einstellung der Wiedergabeleistung (4C, 5C, 6C, 7C, 8C) und der genannten Mittel zur Einstellung der Löschleistung (4B, 5B, 6B, 7B, 8B), in Übereinstimmung mit jeder der Aufzeichnungs-, Wiedergabe- und Löschbetriebsarten und zum Anlegen an die genannten Ansteuerungsmittel (10) aufweisen.

4. Vorrichtung zur Datenaufzeichnung und -wiedergabe auf oder von einer optischen Platte, wobei die Vorrichtung enthält:
einen Detektor (2, 3) zum Detektieren der Lichtemissionsleistung einer Laserlichtquelle (1),
Mittel zur Leistungseinstellung (4A-C, 5A-C, 6A-C, 7A-C, 8A-C) zum Vergleichen der detektierten Lichtemissionsleistung mit einem Zielwert und zum Einstellen der Lichtemissionsleistung der Laserlichtquelle (1) auf der Grundlage eines Vergleichsausgangssignals, und
Ansteuerungsmittel (10) zum Ansteuern der genannten Laserlichtquelle (1) auf der Grundlage der Leistungseinstellung durch die genannten Mittel zur Leistungseinstellung (4A-C, 5A-C, 6A-C, 7A-C, 8A-C), wobei die Mittel zur Leistungseinstellung (4A-C, 5A-C, 6A-C, 7A-C, 8A-C) eingerichtet sind, das Detektionsausgangssignal des Detektors (2, 3) abzutasten und zu halten, um den genannten abgetasteten und gehaltenen Wert mit einem Zielwert zu vergleichen, und um die Lichtemissionsleistung der Laserlichtquelle (1) auf der Grundlage eines Vergleichsausgangssignal einzustellen, dadurch gekennzeichnet, daß die genannten Mittel zur Leistungseinstellung enthalten:
Mittel zur Einstellung der Aufzeichnungsleistung (4A, 5A, 6A, 7A, 8A) zur Einstellung der Leistung der genannten Laserlichtquelle (1), wenn Daten auf die genannte optische Platte aufgezeichnet werden, wobei die genannten Mittel zur Einstellung der Aufzeichnungsleistung (4A, 5A, 6A, 7A, 8A) aus einer ersten Abtast-Halte-Schaltung (4A) zum Abtasten und Halten des Detektionsausgangssignals des genannten Detektors (2, 3), einem ersten Komparator (5A) zum Vergleichen eines Ausgangssignals der ersten Abtast-Halte-Schaltung (4A) mit einem ersten Zielwert, und einem ersten Filter (7A), an das ein Vergleichsausgangssignal des genannten ersten Komparators (5A) gelegt wird, bestehen, und
Mittel zur Einstellung der Wiedergabeleistung (4C, 5C, 6C, 7C, 8C) zum Einstellen der Leistung der genannten Laserlichtquelle (1), wenn die auf der optischen Platte aufgezeichneten Daten wiedergegeben werden, wobei die genannten Mittel zur Einstellung der Wiedergabeleistung (4C, 5C, 6C, 7C, 8C) aus einer zweiten Abtast-Halte-Schaltung (4C) zum Abtasten und Halten des Detektionsausgangssignals des Detektors (2, 3), einem zweiten Komparator (5C) zum Vergleichen eines Ausgangssignals der genannten zweiten Abtast-Halte-Schaltung (4C) mit einem zweiten Zielwert, und einem zweiten Filter (7C), an das ein Vergleichsausgangssignal des genannten zweiten Komparators (5C) angelegt wird, bestehen.

5. Vorrichtung nach Anspruch 4, bei welcher die genannten Mittel zur Leistungseinstellung (4A-C, 5A-C, 6A-C, 7A-C, 8A-C) Mittel zur Einstellung der Löschleistung (4B, 5B, 6B, 7B, 8B) zum Einstellen einer Leistung der genannten Laserlichtquelle, wenn die auf der optischen Platte aufgenommenen Daten gelöscht werden sollen, aufweisen, und wobei die genannten Mittel zur Einstellung der Löschleistung (4B, 5B, 6B, 7B 8B) aus einer dritten Abtast-Halte-Schaltung (4B) zum Abtasten und Halten des Detektionsausgangssignal des genannten Detektors (2, 3), einem dritten Komparator (5B) zum Vergleichen eines Ausgangssignals der genannten dritten Abtast-Halte-Schaltung mit einem Zielwert zum Löschen der Daten, und einem dritten Filter (7B), an das ein Vergleichsausgangssignal des genannten dritten Komparators angelegt wird, bestehen.

6. Vorrichtung nach Anspruch 5, bei der die genannten Mittel zur Leistungseinstellung (4A-C, 5A-C, 6A-C, 7A-C, 8A-C) Schaltmittel (9) zum selektiven Durchschalten der Ausgangssignale der genannten Mittel zur Einstellung der Aufzeichnungsleistung (4A, 5A 6A, 7A, 8A), der genannten Mittel zur Einstellung der Wiedergabeleistung (4C, 5C, 6C, 7C, 8C) und der genannten Mittel zur Einstellung der Löschleistung (4B, 5B, 6B, 7B, 8B) in Übereinstimmung mit jeder der Aufzeichnungs-, Wiedergabe- und Löschbetriebsarten und zum Anlegen an die genannten Ansteuerungsmittel(10), aufweisen.

7. Optische Platte mit einem optischen Aufzeichnungsbereich, welcher aus einer Vielzahl von Spuren (T) besteht, und in welchen ein Informationssignal optisch aufgezeichnet werden kann, bei welcher ein Teil des Aufnahmebereichs der Platte Datenbereiche enthält, in denen Information aufgezeichnet wird, und Servobereiche (SA), welche einen Steuerbereich (SA1), der Vertiefungen (P1, P2) enthält, die bezüglich der Spur versetzt sind zur Verwendung durch eine Aufzeichnungs-bzw. Wiedergabevorrichtung zur Steuerung der Spureinstellung, und einen ersten Abfragebereich (1) enthalten, welcher einen Zwischenbereich aufweist, der keine Vertiefungen für die Verwendung durch die Vorrichtung bei der Lichtsteuerung aufweist, dadurch gekennzeichnet, daß die Datenbereiche (DA) unmittelbar den Servobereichen (SA) folgen, wobei keine Sektorlücke zwischen den Servobereichen (SA) und den Datenbereichen (DA) vorgesehen ist.

8. Optische Platte nach Anspruch 7, bei der der genannte Steuerbereich (SA1) in dem genannten Aufzeichnungsbereich auf der Zugangsseite bezüglich der Spureinstellungsrichtung eines zweiten Abfragebereichs (SA2) vorgesehen ist.

9. Optische Platte nach Anspruch 7 oder 8, bei der sich ausgangsseitig bezüglich der Spureinstellungsrichtung des genannten Steuerbereichs der genannte erste Teilabfragebereich (1) befindet, an dem sich ausgangsseitig eine Vertiefung (P3) für die Zeitsteuerung anschließt, an welcher sich ausgangsseitig ein zweiter Abfragebereich (SA2) anschließt, dem unmittelbar der Datenbereich (DA) folgt.

## Revendications

1. Ensemble d'enregistrement et de lecture optique de données, comprenant un disque optique et un appareil d'enregistrement de données sur le disque et de lecture de données du disque, les données comprenant une zone de données (DA) et plusieurs zones d'asservissement (SA), chaque zone d'asservissement (SA) ayant une zone d'extraction destinée à être utilisée par l'appareil pour le réglage des niveaux lumineux d'enregistrement et de lecture, et
l'appareil comprenant un détecteur (2, 3) destiné à détecter la puissance lumineuse émise par une source de lumière laser (1),
un dispositif (4A-C, 5A-C, 6A-C, 7A-C, 8A-C) de réglage de puissance destiné à comparer la puissance d'émission lumineuse détectée à une valeur cible et à régler la puissance d'émission lumineuse de la source (1) de lumière laser en fonction du signal de sortie de comparaison, et
un dispositif de pilotage (10) destiné à piloter la source de lumière laser (1) en fonction de la puissance réglée par le dispositif de réglage de puissance (4A-C, 5A-C, 6A-C, 7A-C, 8A-C),
dans lequel le dispositif de réglage de puissance (4A-C, 5A-C, 6A-C, 7A-C, 8A-C) comporte un dispositif (4A, 5A, 6A, 7A) de réglage de puissance d'enregistrement destiné à régler la puissance de la source lumineuse laser (1) lorsque des données sont enregistrées sur le disque optique, le dispositif de réglage de puissance d'enregistrement (4A, 5A, 6A, 7A, 8A) comprenant un premier circuit (4A) d'échantillonnage et de maintien du signal de détection du détecteur (2, 3) lorsqu'il détecte la puissance d'émission lumineuse de la zone d'extraction (SA1, SA2), un premier comparateur (5A) destiné à comparer un signal de sortie du premier circuit d'échantillonnage et de maintien (4A) à une valeur cible, et un premier filtre (7A) qui reçoit le signal de sortie de comparaison du premier comparateur (5A), et
un dispositif (4C, 5C, 6C, 7C) de réglage de puissance de lecture destiné à régler la puissance de la source de lumière laser (1) lorsque les données enregistrées sur le disque sont lues, le dispositif (4C, 5C, 6C, 7C) de réglage de puissance de lecture étant formé d'un second circuit (4C) d'échantillonnage et de maintien du signal de sortie de détection du détecteur (2, 3) qui détecte la puissance lumineuse émise provenant de la zone d'extraction (SA1, SA2), un second comparateur (5C) destiné à comparer le signal de sortie du second circuit (4C) d'échantillonnage et de maintien à une seconde valeur cible, et un second filtre (7C) qui reçoit le signal de sortie de comparaison du second comparateur (5C).

2. Ensemble selon la revendication 1, dans lequel le dispositif de réglage de puissance (4A-C, 5A-C, 6A-C, 7A-C, 8A-C) comporte un dispositif (4B, 5B, 6B, 7B, 8B) de réglage de puissance d'effacement destiné à régler la puissance de la source de lumière laser lorsque les données enregistrées sur le disque optique doivent être effacées, et le dispositif (4B, 5B, 6B, 7B, 8B) de réglage de puissance d'effacement comporte un troisième circuit (4B) d'échantillonnage et de maintien du signal de sortie de détection provenant du détecteur (2, 3), un troisième comparateur (5B) destiné à comparer le signal de sortie du troisième circuit d'échantillonnage et le maintien à une valeur cible pour l'effacement des données, et un troisième filtre (7B) qui reçoit un signal de sortie de comparaison du troisième comparateur (7B).

3. Ensemble selon la revendication 2, dans lequel le dispositif de réglage de puissance (4A-C, 5A-C, 6A-C, 7A-C, 8A-C) possède un dispositif (9) destiné à assurer la commutation sélective des signaux de sortie du dispositif (4A, 5A, 6A, 7A, 8A) de réglage de puissance d'enregistrement, du dispositif (4C, 5C, 6C, 7C, 8C) de réglage de puissance de lecture et du dispositif (4B, 5B, 6B, 7B, 8B) de réglage de puissance d'effacement, en fonction de chacun des modes d'enregistrement, de lecture et d'effacement, et à assurer l'alimentation du dispositif de pilotage (10).

4. Appareil d'enregistrement de données sur un disque optique et de lecture des données du disque optique, l'appareil comprenant :
un détecteur (2, 3) destiné à détecter la puissance d'émission lumineuse d'une source de lumière laser (1),
un dispositif (4A-C, 5A-C, 6A-C, 7A-C, 8A-C) de réglage de puissance destiné à comparer la puissance détectée d'émission lumineuse à une valeur cible et à régler la puissance d'émission lumineuse de la source de lumière laser (1) en fonction du résultat de la comparaison, et
un dispositif (10) de pilotage de la source de lumière laser (1) en fonction de la puissance fixée par le dispositif de réglage de puissance (4A-C, 5A-C, 6A-C, 7A-C, 8A-C), dans lequel le dispositif de réglage de puissance (4A-C, 5A-C, 6A-C, 7A-C, 8A-C) est destiné à échantillonner et maintenir le signal de sortie du détecteur (2, 3) afin qu'il compare la valeur échantillonnée et maintenue à une valeur cible et qu'il règle la puissance d'émission lumineuse de la source de lumière laser (1) en fonction du résultat de la comparaison,
caractérisé en ce que le dispositif de réglage de puissance (4A-C, 5A-C, 6A-C, 7A-C, 8-C) comporte :
un dispositif (4A, 5A, 5A, 7A) de réglage de puissance d'enregistrement destiné à régler la puissance de la source de lumière laser (1) lorsque des données sont enregistrées sur le disque optique, le dispositif (4A, 5A, 6A, 7A, 8A) de réglage de puissance d'enregistrement comprenant un premier circuit d'échantillonnage et de maintien (4A) destiné à échantillonner et maintenir le signal de sortie de détection du détecteur (2, 3), un premier comparateur (5A) destiné à comparer le signal de sortie du premier circuit d'échantillonnage et de maintien (4A) à une première valeur cible, et un premier filtre (7A) qui reçoit le signal de sortie de comparaison du premier comparateur (5A), et
un dispositif (4C, 5C, 6C, 7C) de réglage de puissance de lecture destiné à régler la puissance de la source de lumière laser (1) lorsque les données enregistrées sur le disque optique sont lues, le dispositif (4C, 5C, 6C, 7C) de réglage de puissance de lecture étant constitué d'un second circuit (4C) d'échantillonnage et de maintien du signal de détection provenant du détecteur (2, 3), d'un second comparateur (5C) destiné à comparer le signal de sortie du second circuit d'échantillonnage et de maintien (4C) à une seconde valeur cible, et d'un second filtre (7C) qui reçoit le signal de sortie de comparaison du second comparateur (5C).

5. Appareil selon la revendication 4, dans lequel le dispositif de réglage de puissance (4A-C, 5A-C, 6A-C, 7A-C, 8A-C) comporte un dispositif (4B, 5B, 6B, 7B, 8B) de réglage de puissance d'effacement destiné à régler la puissance de la source de lumière laser lorsque les données enregistrées sur le disque optique doivent être effacées, et le dispositif (4B, 5B, 6B, 7B, 8B) de réglage de puissance d'effacement comporte un troisième circuit (4B) d'échantillonnage et de maintien du signal de sortie de détection provenant du détecteur (2, 3), un troisième comparateur (5B) destiné à comparer le signal de sortie du troisième circuit d'échantillonnage et le maintien à une valeur cible pour l'effacement des données, et un troisième filtre (7B) qui reçoit un signal de sortie de comparaison du troisième comparateur (7B).

6. Appareil selon la revendication 5, dans lequel le dispositif de réglage de puissance (4A-C, 5A-C, 6A-C, 7A-C, 8A-C) possède un dispositif (9) destiné à assurer la commutation sélective des signaux de sortie du dispositif (4A, 5A, 6A, 7A, 8A) de réglage de puissance d'enregistrement, du dispositif (4C, 5C, 6C, 7C, 8C) de réglage de puissance de lecture et du dispositif (4B, 5B, 6B, 7B, 8B) de réglage de puissance d'effacement, en fonction de chacun des modes d'enregistrement, de lecture et d'effacement, et à assurer l'alimentation du dispositif de pilotage (10).

7. Disque optique ayant une zone d'enregistrement optique formée de plusieurs pistes (T) et dans lequel un signal d'information peut être enregistré optiquement, dans lequel une partie de la zone d'enregistrement du disque comporte des zones de données dans lesquelles des informations sont enregistrées et des zones d'asservissement (SA) comprenant une zone de commande (SA1) ayant des cavités (P1, P2) décalées par rapport à la piste et destinées à être utilisées par l'appareil d'enregistrement et de lecture pour la commande de poursuite, et une première zone d'extraction (1) comportant un espace sans cavité destinée à être utilisée par l'appareil pour le réglage de la lumière, caractérisé en ce que les zones de données (DA) suivent immédiatement les zones d'asservissement (SA) sans espace de secteur formé entre les zones d'asservissement (SA) et les zones de données (DA).

8. Disque optique selon la revendication 7, dans lequel la zone de commande (SA1) est formée dans la zone d'enregistrement du côté amont par rapport à la direction de poursuite d'une seconde zone d'extraction (SA2).

9. Disque optique selon l'une des revendications 7 et 8, dans lequel, en aval dans le sens de poursuite de la zone de commande, est disposée la première zone d'extraction (1) en aval de laquelle est disposée une cavité (P3) de commande de synchronisation en aval de laquelle est disposée une seconde zone d'extraction (SA2) suivie immédiatement par la zone de données (DA).
